# EUROPÄISCHE PATENTANMELDUNG

(11) **EP 4 517 403 A1**
(43) Veröffentlichungstag der Anmeldung: **05.03.2025**
(21) Anmeldenummer: 23194114.7
(22) Anmeldetag: 29.08.2023
(51) Int. Cl.: G02B 19/00, G02B 27/09, F21V 1/00, F21K 9/60

(54) **FARBMISCHENDE SAMMELOPTIK MIT VERBESSERTER FUNKTIONALITÄT**

(71) Anmelder: Otto, Alexander, 2013 Göllersdorf Niederösterreich (AT)
(72) Erfinder: Otto, Alexander, 2013 Göllersdorf Niederösterreich (AT)

(57) **Zusammenfassung**

Es wird eine neuartige vollfarbmischende Optik unter Verwendung bekannter RGB-LEDs vorgeschlagen, welche dank ihrer geringen Größe insbesondere für Pixel von Wechselverkehrszeichen und Anzeigetafeln, aber auch für beliebige andere Anwendungen geeignet ist. Ausgehend von einer bekannten Ausführung nach WO 2012/068603, welche ein vollständiges Ausmischen der LED-Lichtfarben vorstellt und seitdem als Stand der Technik gilt, wird durch Einschränkung der in den Lichtquellen verwendeten Chips und deren Anordnung ein bisher unbekannter Freiraum in der Gestaltung des Lichtleiters und der vorgesetzten Sammellinse und damit in der erzielbaren Lichtverteilung aufgedeckt, welcher nicht nur eine verbesserte Ausmischung der Farben und genauere Anpassung der Lichtverteilung an Vorgaben erlaubt, sondern auch neue Anwendungen erschließen kann. Die eingesetzten Chips (R, G, B) müssen hierzu in linearer dichter Anordnung und gleicher Größe und Abstrahlcharakteristik vorliegen, was mittlerweile ohnehin Standard geworden ist, dann ist eine Farbmischung nur in dieser linearen Richtung notwendig. Hierzu weist der Lichtleiter (3) beidseits der linearen Richtung und symmetrisch zueinander zwei Reflexionsebenen (4a, 4b) auf, welche eine endlose Spiegelbild-Reihe der Lichtquelle (1) zur Vermischung erzeugen, in Querrichtung dazu sind frei gestaltete Verbindungsflächen (5a, 5b) vorhanden. Die Sammellinse (7) weist nur in der linearen Richtung einen Brennpunkt (Fh) auf dessen Austrittsfläche (6) auf, in Querrichtung dazu einen anderen Brennpunkt, Brennfleck oder einen Brennweitenverlauf, die Linsenkuppe (8) bildet somit eine Freiformfläche.

## Beschreibung

Die Erfindung betrifft eine farbmischende Sammeloptik, welche einerseits für vollfarbtaugliche Pixel für Anzeigetafeln im Freien zur Darstellung von Grafiken, Bildern und Videos auf größere Entfernungen, andererseits aber auch als vollfarbtaugliche Lichtquelle für allgemeine und Effekt-Beleuchtungszwecke eingesetzt werden kann.

Während früher eine solche Anwendung die Verwendung von zumindest drei Einzeloptiken mit einfarbigen LEDs in den Grundfarben Rot, Grün und Blau für ein Pixel erforderte, haben sich im Indoor-Bereich sogenannte Fullcolor- bzw. RGB-LEDs durchgesetzt, welche in der Regel drei Chips in den Grundfarben Rot, Grün und Blau in einem gemeinsamen Gehäuse mit ebenem transluzenten Verguss enthalten, wobei hier als Chip bzw. Chip-Abmessungen die leuchtende Fläche der verwendeten Halbleiter bezeichnet wird. Sie sind in verschiedenen Größen erhältlich, sodass auch hochauflösende Darstellungen auf kleineren Anzeigetafeln möglich sind. Sie strahlen ihr Licht ohne Optik in Form eines Cosinus-Strahlers direkt in den Raum ab und weisen deshalb eine relativ geringe Helligkeit der Anzeige auf, sind aber sehr gut aus der Nähe und aus einem großen Beobachtungsbereich zu sehen. Für die Anzeigetafeln im Freien sind sie so nicht geeignet, oder nur mit erheblichem Energieverbrauch und Kühlungsaufwand sowie einer Abdichtung, und deren Betrieb wäre mit hohen Kosten verbunden. Hingegen wäre mit einer geeigneten Sammeloptik sowohl deren fokussierte Helligkeit, als auch der hierdurch eingeschränkte Betrachtungswinkel völlig ausreichend und würde einschlägigen Normen entsprechen.

Leider ist es mit dem Vorsetzen einer Sammellinse nicht getan, weil hierdurch der unvermeidliche Abstand der drei Chips zueinander zu drei nicht deckungsgleichen Lichtkegeln führt und somit weder die vorgeschriebenen Verkehrsfarben, noch die geforderte Gleichmäßigkeit erfüllt werden, es würden sich in Abhängigkeit vom Betrachtungswinkel Farbfleckigkeiten und Farbsäume ergeben, und die bisher bekannten einfachen Mittel für eine Farbmischung sind aus Kosten- und Platzgründen nicht anwendbar.

Nach vielen Jahren des Probierens und Überlegens wurde endlich mit der internationalen Anmeldung WO 2012/068603 eine einfache und sehr effiziente Lösung dieses Problems präsentiert, welche sich rasch auf dem Markt durchgesetzt hat, weshalb der Patentschutz vom Mitbewerb erbittert bekämpft und in Zweifel gezogen wurde, jedoch letztlich ohne Erfolg. Die darin ausführlich erläuterte Wirkungsweise ist in der Tat nicht einfach nachvollziehbar, liefert aber ein außergewöhnlich gutes Farbmischungs- und Lichtverteilungs-Ergebnis mit einfacher Geometrie, sodass eine gleichwertige alternative Ausführung als Umgehungsoption für die Mitbewerber unmöglich erscheint.

Der Erfinder hat jedoch eine Möglichkeit der Ausgestaltung gefunden, welche diese Anmeldung nicht verletzt, eine zumindest ähnliche, aber auch besser anpassungsfähige und vielfältiger gestaltbare Lichtverteilung und dabei sogar verbesserte Farbmischung bietet, und auch völlig neue und andersartige Lichtverteilungen und Lichtlösungen erlaubt. Daher wird diese Ausgestaltung ebenfalls zum Patent angemeldet.

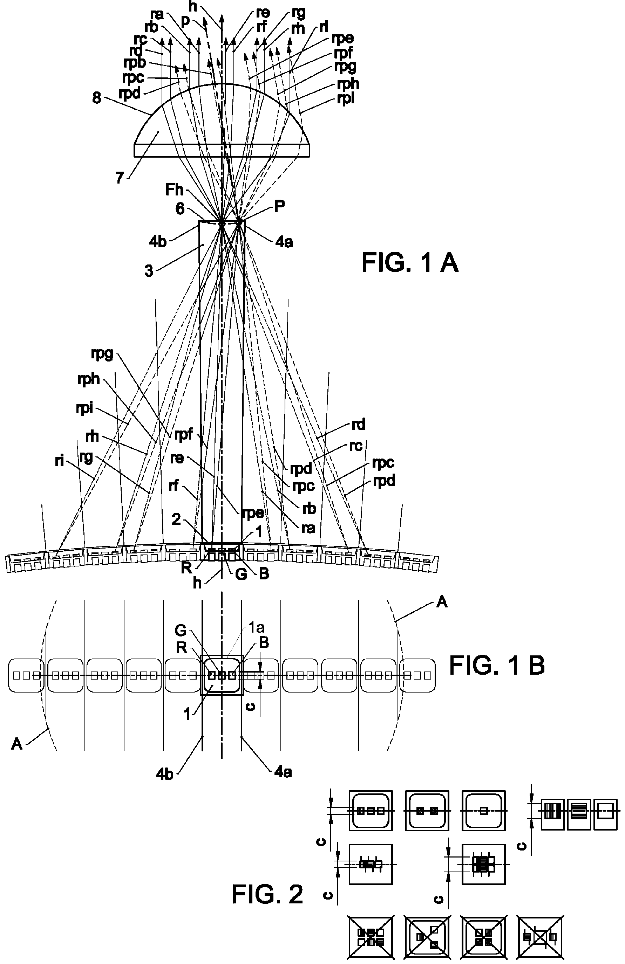

Die Erfindung bezieht sich in ihren Ausführungen auf jene internationale Anmeldung WO 2012/068603 (Swarco), auch als EP 2643717 B1 oder PCT/AT2011/000468 veröffentlicht, welche als Stand der Technik anzusehen ist und hinsichtlich Gegenhaltungen und Einwänden und darin angeführten nahekommenden bekannten Veröffentlichungen, welche auch hier genauso angeführt werden könnten, ausführlich überprüft wurde und dieser neuen Erfindung natürlich am nächsten kommt. Sie stellt eine ausgezeichnete Farbmischung für beliebige Kristall-Anordnungen dar, welche durch eine lückenlose Vielfach-Spiegelung an den hochglanzpolierten Ebenen des Lichtleiters (FIG. 1, Unteranspruch 10) bzw. Hauptanspruch im EP eine gleichmäßig hell abstrahlende Austrittsfläche (4) erzeugen, auf welcher der Fokus (F) der vorgelagerten Sammellinse (5) zu liegen kommt. Die Sammellinse ist daher ein entsprechend gestalteter Rotationskörper.

Die nun vorliegende Erfindung verwendet ebenso eine RGB- oder Multicolor-LED-Lichtquelle, welche allerdings bestimmte Bedingungen hinsichtlich der Anordnung, Art und Größe der Chips erfüllen muss, was aber in der Realität nur in Ausnahmefällen Probleme bereitet. Hierdurch ergibt sich eine größere Gestaltungsfreiheit der farbmischenden Optik, welche eine genauere und damit effizientere, aber auch vielfältigere Anpassung der resultierenden Lichtverteilung erlaubt und sich von der bekannten Ausführung deutlich unterscheidet. Sie weist zwar genauso in Richtung der Haupt-Lichtabstrahlrichtung eine Lichteintrittsfläche, einen Lichtleiter und eine Sammellinse auf, ist aber **dadurch gekennzeichnet, dass** alle Chips der LED-Lichtquelle in dichtem Abstand linear angeordnet sind, gleiche Breiten-Abmessungen und Abstrahlcharakteristiken aufweisen, dass der Lichtleiter beidseitig der linearen Anordnung durch darauf senkrecht ausgerichtete, symmetrisch ausgeführte hochglanzpolierte Reflexionsebenen begrenzt wird, deren Abstand zueinander konstant ist oder in Richtung der Sammellinse allmählich zunimmt und deren Enden die Austrittsfläche festlegen, sowie quer dazu durch anderweitig geformte hochglanzpolierte Verbindungsflächen scharfkantig begrenzt ist, und dass die Sammellinse im Querschnitt in Richtung der linearen Anordnung einen Brennpunkt aufweist, der auf dieser Austrittsfläche des Lichtleiters zu liegen kommt, und quer dazu einen anderen, oder gar keinen ausgeprägten Brennpunkt, oder einen Brennfleck aufweist und somit die hochglanzpolierte Linsenkuppe eine Freiformfläche darstellt.

Als Chipbreite (c) wird hier immer das Maß quer zur linearen Anordnung verstanden. Mit anderen Worten: sind die Chips in einer engen linearen Anordnung positioniert und weisen sie gleiche Breiten und gleiche Abstrahlcharakteristiken auf, was nun etwa bei den allermeisten RGB-LEDs für Video-Anzeigen der Fall ist, so ist es ausreichend, die unterschiedlichen Farben nur in Richtung der linearen Anordnung zu vermischen, was durch die beidseitig angeordneten Reflexionsebenen des Lichtleiters erfolgt, in Querrichtung ist jedoch keine Farbmischung notwendig. Damit sind die Verbindungsflächen zwischen den Reflexionsebenen des Lichtleiters der mischungsbedingten Gestaltung als Reflexionsebenen entbunden und können somit eine genauer angepasste oder andersartige Lichtverteilung in dieser Richtung bewirken. Ebenso ist die für die Farbmischung notwendige Sammellinsenkontur mit einem Brennpunkt auf der Lichtaustrittsfläche des Lichtleiters dann auch nur für den Linsenquerschnitt in dieser linearen Richtung notwendig, quer dazu kann die Sammellinse einen davon unabhängigen Verlauf nehmen, was meist zur Ausbildung von oval-, ei- oder stabförmig erscheinenden Linsengeometrien führt. Die Lichtverteilung quer zur linearen Chipanordnung erfolgt dann durch das Zusammenwirken der Verbindungsflächen mit der Sammellinsengestaltung in dieser Richtung. Weil hier wesentlich mehr Gestaltungsparameter als in der linearen Vermischungsrichtung mittels Ebenen vorliegen, entstehen daraus mehr und neue Möglichkeiten für die Lichtverteilung gegenüber der bekannten Ausführung, insbesonders auch für neue erst zu entwickelnde Anwendungen.

Es findet hier also eine Aufteilung in zwei nur wenig voneinander abhängige Systeme statt, einmal das farbmischende System in linearer Richtung mit den beiden Reflexionsebenen und dem zugehörigen Brennpunkt des Sammellinsen-Querschnitts auf der Austrittsfläche, und quer dazu ein ziemlich frei gestaltbares lichtlenkendes System bestehend aus Verbindungsflächen und einem zugehörigen Sammellinsen-Querschnitt mit anderer Brennpunktlage oder einem Brennweitenverlauf, wobei diese beiden Linsenquerschnitte senkrecht aufeinander stehen und nach mathematischen Regeln und Formeln eine Freiform-Oberfläche definieren, welche die Sammellinse abschließt, beispielsweise indem eine Kontur entlang der anderen extrudiert und dabei optional weiteren Modifikatoren unterworfen wird. Die Sammelwirkung als notwendiger Bestandteil der Farbmischung muss nur in der linearen Richtung vorhanden sein, in der Querrichtung ist das nicht notwendig.

Im bereits bekannten System wird der Lichtleiter für eine allseitige, hochwertige Farbmischung nur von hochglanzpolierten Ebenen begrenzt (Fig. 1, Hauptanspruch, Unteranspruch 10), im erfindungsgemäßen System jedoch von zwei einander gegenüberliegenden hochglanzpolierten Ebenen und freier gestaltbaren hochglanzpolierten Verbindungsflächen, von denen mindestens eine gekrümmt oder geknickt, oder auch mit einer Oberflächenstruktur versehen ist. Die bereits bekannte Sammellinse ist geometrisch ein Rotationskörper mit optischem Fokuspunkt, auch als "bildgebend" bezeichnet, die erfindungsgemäße Sammellinse weist jedoch eine Freiformgeometrie ohne einen solchen einheitlich definierten Fokuspunkt auf.

Die Anforderungen an die Lichtverteilung und die gestalterischen Möglichkeiten für Lichtleiter und Sammellinse bestimmen, wie die lineare Anordnung der Chips im Anzeige-Produkt zu orientieren ist. Für eine übliche Verkehrsanzeigetafel empfiehlt sich die lineare Anordnung in horizontaler Richtung, weil sich hierbei entstehende Cosinus-ähnlich verlaufende Lichtverteilungen schon lange bewährt haben und auch durch die Produkt-Norm EN 12966 nahegelegt werden und einige Ausgestaltungen dazu den Sonnenstand einbeziehen müssen. In Querrichtung ist die Lichtverteilung viel anspruchsvoller, was besser mit der freien Gestaltung der Verbindungsflächen erzeugt werden kann. Es wird daher in weiteren Schilderungen nur mehr von einer horizontalen Ausrichtung ausgegangen, um die Figurenbeschreibungen einfach und verständlich zu halten, das stellt aber keinerlei Einschränkung hinsichtlich der Orientierung der Erfindung im Raum dar, man denke nur an eine allgemeine Verwendung des Systems in einer Vollfarb-Taschenlampe.

Quer dazu, also nun in vertikaler Richtung erscheint eine gute Lichtverteilung als halbierte Cosinus-ähnliche Verteilung, welche oberhalb der Hauptabstrahlrichtung möglichst Null sein soll, weil bei üblicher hoher Aufstellung der Anzeigetafeln ohnehin niemand von oberhalb draufsehen kann, und von der Hauptabstrahlrichtung mit Maximalhelligkeit nach unten zu abfallend. Hierdurch würde sich auch die Helligkeit bzw. Effizienz nahezu verdoppeln. Eine solche Lichtverteilung ist grundsätzlich schwierig zu erreichen, aber für diesen Einsatzfall unerlässlich, denn sie reduziert auch das Rückstahlverhalten bei auftreffendem Sonnenlicht erheblich, was aber nicht Inhalt dieser Anmeldung ist.

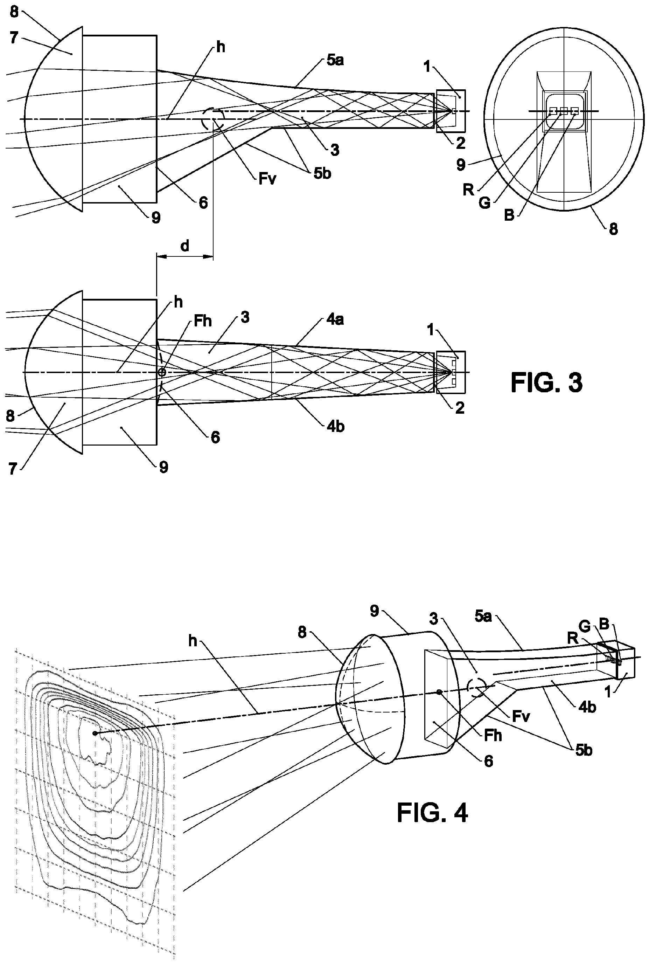

Eine hierbei störende Eigenschaft der bereits bekannten Lösung ist die auf den Kopf gestellte Projektion der Lichtleiter-Austrittsfläche (4) ins Unendliche durch die sogenannte "bildgebende" Eigenschaft der Sammellinse mit ihrem Fokuspunkt auf der Austrittsfläche, die hauptsächlich rechteckige Form dieser überall gleich hellen Austrittsfläche (4) findet sich daher in jeder Lichtverteilungsvariante wieder und muss durch begleitende Maßnahmen passend positioniert, kaschiert, ergänzt und auch verunschärft werden, was wegen der engen Gestaltungsvorgaben schwierig ist. Das ist besonders gut in deren FIG. 4 zu erkennen, wo die Lichtverteilung durch das von der Austrittsfläche (4) gebildete Rechteck erzeugt wird, welches mittels verlängerter Begrenzungsebenen (8, 8a) des Lichtleiters (2) mit auslaufendem Licht (9, 9a) umgeben wird. Hierdurch wird aber die Gestaltungsregel verletzt, indem sich Austrittsfläche (4) und Fokus (F) nicht mehr genau am Ende des Lichtleiters befinden und so wegen beginnender Entmischung zum Rand der Lichtverteilung hin in den Bereichen (9, 9a) zwar eine gewisse benötigte Unschärfe, aber auch eine gewisse Farbveränderung entsteht. Die gewünschte Lichtverteilung kann daher nur durch Ergänzungen und kleine Abweichungen von den geometrischen Anforderungen des Farbmischsystems erzielt werden und stellt damit einen Kompromiss zwischen Farbmischungsqualität und gewünschter Lichtverteilung dar.

In der erfindungsgemäßen Anmeldung hingegen ist weder die Austrittsfläche des Lichtleiters gleichmäßig hell, noch die Sammellinse bildgebend, noch sind die Reflexionsebenen des Lichtleiters über die Austrittsfläche hinaus verlängert. Dadurch weist sie sowohl bessere Mischungsqualität als auch größere Gestaltungsfreiheit oder Anpassungsfähigkeit in der Lichtverteilung auf, welche aber nicht unmittelbar einsichtig und nur durch Lichtsimulation bestimmbar ist, wie nun im Detail dargelegt und erläutert wird.

Es zeigt FIG. 1 A und 1 B den prinzipiellen Aufbau und die Funktionsweise der Erfindung in Längs- und Queransicht, FIG. 2 zeigt taugliche und untaugliche ChipAnordnungen von LED-Lichtquellen in Draufsicht, FIG. 3 eine erfindungsgemäße Ausführung einer Optik in Grund-, Auf- und Seitenansicht, FIG. 4 zeigt die Erfindung in anschaulicher Darstellung mit der erzeugten Lichtverteilung, FIG. 5 den simulierten Strahlengang in Grund- und Aufriss mit Darstellung der erzielten Lichtverteilung der Optik in drei Grafiken, FIG. 6 die erzielten Lichtverteilungen der einzelnen Chips im Vergleich, FIG. 7 eine andere Anwendung der Erfindung in Grund- und Aufriss mit Strahlengang und Darstellung der erzielten Lichtverteilung ebenfalls in drei Grafiken, FIG. 8 eine Optik mit zwei Lichtbündeln im Aufriss und FIG. 9 eine abgewinkelte Optik im Aufriss, jeweils mit erzielten Lichtverteilungen.

In FIG. 1 A ist die farbmischende Optik in Längsansicht zu sehen. Eine eben vergossene LED-Lichtquelle 1 mit drei linear nebeneinander liegenden Chips in den Grundfarben Rot R, Grün G und Blau B sendet ihr Licht in eine unmittelbar davor befindliche Eintrittsfläche 2 eines Lichtleiters 3, dieses wird zum Lot gebrochen und durch eine nicht dargestellte oftmalige verlustlose Totalreflexion an den Seitenwänden weitergeleitet, welche hierfür als hochglanzpolierte Ebenen 4a und 4b ausgebildet sind. Die Ebenen sind symmetrisch zur optischen Achse, der Hauptachse h der Optik und entweder parallel zueinander oder unter leichtem Winkel mit allmählich zunehmendem Abstand voneinander angeordnet. Ihre Enden definieren eine Austrittsfläche 6, durch welche das Licht durchgeht und in die Sammellinse 7 eindringt, wo es auf die Linsenkuppe 8 trifft und dort wiederum abgelenkt wird.

In der folgenden Betrachtung wird nur der rote Chip R als leuchtend angenommen. Die Linsenkuppe 8 erscheint in dieser Darstellung als Erzeugende einer Linsenfläche, welche jeden von außerhalb parallel zur Achsrichtung h einfallenden Lichtstrahl soweit ablenkt, dass er durch einen horizontalen Brennpunkt Fh läuft, welcher sich auf der Austrittsfläche 6 und der Hauptachse h befindet und damit auch umgekehrt jeden roten Lichtstrahl ra, rb, rc ... der LED-Lichtquelle 1, der durch diesen horizontalen Brennpunkt Fh läuft, parallel zur Hauptachse h lenkt. Alle Lichtstrahlen rpa, rpb, rpc ... , die durch einen beliebigen Punkt P auf der Austrittsfläche 6 gehen, werden durch die Linsenkuppe 8 parallel zueinander in eine Richtung p abgelenkt. Damit wird die Austrittsfläche 6 nach optischen Gesetzmäßigkeiten ins Unendliche projiziert. Gleiches gilt auch für die andersfarbigen Chips G und B. Es findet also eine Transformation der Austrittsfläche 6 in eine Lichtverteilung statt, indem jedem Punkt P der Austrittsfläche durch die Sammellinse 7 und ihre Freiform-Linsenkuppe 8 eine Richtung p zugewiesen wird, in welche das Licht mit der im Punkt P vorhandenen Helligkeit und Farbe abstrahlt, unabhängig von den vorherigen Lichtstrahlrichtungen.

Durch diesen Prozess erfolgt gleichzeitig auch eine präzise Farbmischung, denn durch jeden Punkt P gehen nur Lichtstrahlen, die von einem der Chips oder seinen Spiegelbildern stammen, es handelt sich also nicht um ein homogenes Lichtbündel, sondern wie für Rot dargestellt um ein divergentes Bündel aus einzelnen roten Lichtstrahlen, aber auch der anderen Farben, welches durch die Parallelrichtung mittels der Sammellinse 7 zu einem einzigen "dicken" Lichtbündel etwa im Durchmesser der Sammellinse in Richtung p verschmelzen. Das gilt für jeden Punkt P der Austrittsfläche 6, für alle entsprechenden Richtungen p und für jede der Farben R, G und B im gleichen Maß, es wird also für jede Farbe ein Abbild der Austrittsfläche 6 mit gleicher Charakteristik deckungsgleich ins Unendliche projiziert und deshalb erscheint für einen Beobachter aus jeder Betrachtungsrichtung innerhalb der Lichtverteilung ein gleichartig ausgemischtes Erscheinungsbild in der Mischfarbe, ohne Farbflecken oder Farbsäume, denn das auf ihn treffende Licht kommt immer von allen Chips R, G und B gemeinsam und auf gleiche Weise. Die tatsächliche Mischfarbe der Optik ergibt sich dann durch unterschiedlich starke Ansteuerung der Einzelfarben, wie allgemein bekannt.

Die hochglanzpolierten Ebenen 4a, 4b reichen vom Lichteintritt 2 des Lichtleiters 3 bis zur Austrittsfläche 6 und laufen symmetrisch zur Hauptachse h ein wenig auseinander, wodurch sich die Divergenz der Lichtstrahlen in bekannter Weise etwas verringert und deren Bündelung erhöht. An den Ebenen 4a, 4b spiegelt sich die LED-Lichtquelle 1 in unendlicher Weise, sodass sich eine leicht gekrümmte Anordnung der Lichtquellen-Spiegelbilder ergibt, welche bis zu einem Grenzwinkel der Lichtweiterleitung im Lichtleiter 3, der sogenannten Apertur (A) wirksam bzw. sichtbar ist. Ebenso sind Lichtstrahlen ra, rb, rc etc., welche von einem Chip R oder dessen Spiegelbild ausgesandt und entweder direkt oder als Spiegelbilder durch den horizontalen Brennpunkt Fh und Lichtstrahlen rpa, rpb, rpc etc., welche direkt oder als Spiegelbilder durch einen beliebig wählbaren Punkt P der Austrittsfläche 6 gehen, eingezeichnet. Sie werden durch die Sammellinse in Richtung der Hauptachse h bzw. in Richtung p parallel zueinander ausgerichtet. Je länger der Lichtleiter 3, umso mehr Spiegelbilder werden erfasst und umso gleichmäßiger ist die resultierende Farbmischung. Gleiches gilt für alle Chips anderer Farben.

Eine so einfach gestaltete Linse kann natürlich nicht die Eigenschaften einer korrigierten und entzerrten Projektionsoptik mit Bildebene aufweisen, es ist nur näherungsweise möglich, sowohl scharfe Punkte P und gleichzeitig paralleles Licht in Richtung p zu erhalten. Eine Optimierung hinsichtlich der Abweichungen ergibt eine konkav gewölbte Austrittsfläche 6 mit allen Punkten P, als strichlierte Kurve dargestellt, und eine zunehmend divergente Lichtabstrahlung, je weiter der Punkt P von der Hauptachse h entfernt ist. Die gezeichneten Lichtstrahlen durch einen Punkt P werden auch nicht als kompaktes Lichtbündel in Richtung p abgestrahlt, sondern weisen bereits eine kleine interne Divergenz auf, herrührend aus der Größe der Chips. Insofern wird die rechteckige Austrittsfläche auch nicht als Rechteck mit scharfen Kanten projiziert, sondern es kommt zu einem Verwaschen und Lichtabfall nach außen, sowie zu einer Verzerrung durch die Freiform-Linsenkuppe 8 der Sammellinse 7, dazu wirkt sich noch die unterschiedliche Helligkeit und Lichtrichtung aus, welche durch später geschilderte Abschirm- oder Gestaltungseffekte noch beeinflusst werden kann.

Für die Farbmischungsqualität sind solche Verzerrungen insofern unerheblich, solange alle Farben in gleicher Weise davon betroffen sind. Hierbei wird natürlich auch vorausgesetzt, dass der Brechungsindex des verwendeten optischen Materials wenig bis nahezu gar nicht von der Farbe bzw. Wellenlänge der verwendeten Lichtfarben abhängt. Das ist bei wichtigen transparenten Kunststoffen und manchen technischen Gläsern der Fall, sodass hieraus keine Probleme bekannt geworden sind.

Die Projektion der ungleich hellen und mit einer Lichtrichtungsverteilung versehenen Austrittsfläche durch diese Freiform-Linse ergibt hier also keineswegs ein gleich helles Rechteck mit angestückelten Lichtflächen wie bei der schon bekannten Anmeldung, sondern es wird die insgesamt abgestimmte Lichtverteilung abgestrahlt.

Da es sich hier aber gedanklich um eine Schnittdarstellung der Optik durch die Hauptachse h handelt, gelten diese Ausführungen auch nur für diese Schnitt-Ebene als prinzipielle Erklärung. Tatsächlich verlaufen unzählige Lichtstrahlen in allen Richtungen durch den Lichtleiter und die Sammellinse, was eine klare zeichnerische Darstellung praktisch unmöglich macht. Selbst in einer räumlich drehbaren 3D-Darstellung im Computer ist kaum was zu erkennen, es bedarf einer geeigneten Datenauswertung.

Hier ist eine separate Sammellinse 7 dargestellt. Jedoch ist eine einteilige Optik, wo der Lichtleiter 3 direkt in die Sammellinse 7 übergeht, oft von Vorteil, weil hierdurch nicht nur Grenzflächenverluste zweier Durchgangsflächen vermieden werden, sondern die Sammellinse auch kleiner wird und eine einteilige Optik viel einfacher positioniert werden kann, die Austrittsfläche 6 ist dann nur virtuell an jener Position vorhanden, wo die Reflexionsebenen 4a und 4b enden, wie etwa in FIG. 3 dargestellt. Allerdings bietet eine separate Sammellinse mehr Gestaltungsmöglichkeiten, etwa unterschiedliche optische Materialien und bessere Linsenkorrektur-Möglichkeiten.

FIG. 1 B stellt die zugehörige Queransicht zur FIG. 1 A dar. Sie zeigt auch das Bild, das ein Beobachter sieht, der durch die Austrittsfläche 6 in den Lichtleiter 3 hineinblickt. Er sieht im Zentrum die LED-Lichtquelle 1 mit den drei Chips R, G und B innerhalb der Lichtaustrittsfläche 1a, welche in einer horizontalen Linie angeordnet sind und gleiche Größe bzw. gleiche vertikale Chipbreite c aufweisen. Die Lichtaustrittsfläche 1a der LED-Lichtquelle 1 liegt zumeist ganz innerhalb der Eintrittsfläche 2, sodass kaum Licht nach außen verloren geht. Zu beiden Seiten sind vertikale Linien eingezeichnet, welche die seitlich begrenzenden spiegelnden Ebenen 4a, 4b des Lichteiters 3 darstellen, sowie alle angrenzenden Spiegelbilder der LED-Lichtquelle 1 zumindest bis zur schon erwähnten kreisförmigen Begrenzung, welche die Apertur A bzw. Wirksamkeitsgrenze zeigt. Man erkennt unter Einbezug von FIG. 1 A weiters, dass nur der mittlere Chip G und dessen Spiegelbilder regelmäßige Abstände aufweisen, die Chips R und B und deren Spiegelbilder bilden einander abwechselnde Paar-Anordnungen, die nur im Mittel denselben Abstand wie R aufweisen, deshalb ist es von Vorteil, möglichst viele Spiegelbilder vermischen zu können. Es handelt sich um das gleiche Phänomen der Erzielung einer mittleren Helligkeit bei einer Vielzahl unregelmäßiger Anordnungen, wie in der schon bekannten Anmeldung geschildert, allerdings tritt es hier nur in horizontaler Richtung auf und wird durch die geometrische Anordnung der Ebenen 4a und 4b horizontal vermischt.

In vertikaler Richtung hingegen muss nichts vermischt werden, wenn die Chips R, G und B horizontal ausgerichtet sind, die gleiche Chipbreite c und gleiche Abstrahlcharakteristiken aufweisen. Dazu stelle man sich in Analogie eine klassische Sammellinse über einer solchen RGB-LED vor, welche auf einem nahen Projektionsschirm drei teilweise überlappende Lichtscheiben in Rot, Grün und Blau in horizontaler Anordnung erzeugt. Um keine farbigen Scheiben mehr erkennen zu können, sind diese horizontal völlig zu vermischen. Das gelingt aber nur, wenn die Scheiben gleiche Größen und gleichen Helligkeitsverlauf aufweisen, sonst erzeugt diese Vermischung gewisse horizontale Farbstreifen, welche zur Beseitigung dann trotzdem auch vertikal zu vermischen wären.

Die schon bekannte Anmeldung geht, wie in deren FIG. 1 und 2 gut erkennbar, von frei wählbaren Chip-Positionen etwa in Dreiecksanordnung, zumeist mit vier elektrischen Anschlüssen aus, welche damals noch häufig waren. Inzwischen hat sich jedoch die lineare Chip-Anordnung in RGB-LEDs mit 6 elektrischen Anschlüssen für individuelle Beschaltung und erheblicher Helligkeits- und Effizienzsteigerung der LEDs durchgesetzt, welche nun auch für engbündelnde Verkehrsanzeigetafeln besser geeignet sind. In den Datenblättern der RGB-LEDs findet man oft deren Lichtverteilungskurven für Rot, Grün und Blau, welche in einer Richtung als deckungsgleich, und quer dazu etwas gegeneinander verschoben erscheinen, es handelt sich um eben diesen Effekt wie zuvor geschildert, der in der betreffenden Richtung ausgemischt werden müsste, aber ohne Optik davor irrelevant ist. FIG. 2 zeigt einige LED-Lichtquellen 1 in Draufsicht. Oft sind sie in unterschiedlichen Größen erhältlich, je nach der benötigten Lichtmenge. In der oberen Reihe sieht man eine RGB-LED, dann eine Bicolor-LED und eine einfarbige LED, welche zwar nicht vermischt werden muss, aber mit der Optik dieselbe Lichtverteilung erzeugt wie die mehrfarbigen LEDs. Daneben sind sogenannte Chip-LEDs in dichter Packung angeordnet. Darunter sind gleichwertige Ausführungen in COB-Technik zu sehen. Ebenso können Chips gleicher Größe und Farbe zu einer größeren Anordnung zusammengesetzt und gleichartig betrieben werden. Die damit erzielte gesamte Chipbreite c und Abstrahlungscharakteristik muss dann aber wieder für alle Farben gleich sein, die Optik dafür muss dann auch entsprechend vergrößert ausgeführt werden. In der untersten Zeile sind Chipanordnungen dargestellt, die keine horizontale Anordnung mit gleicher Chipbreite c bilden und nur mit dem schon bekannten System gemischt werden können. Das gilt auch für LEDs mit einem weißen Chip, der eine starke Blau-Gelb-differierende Farbabstrahlung aufweist und deshalb eine allseitige Vermischung erfordert. Grundsätzlich können beliebige Farben ausgewählt und vermischt werden, sofern die Chips gleiche Maße und Abstrahlcharakteristiken aufweisen.

FIG. 3 zeigt in Grund-, Auf- und Seitenriss eine Ausgestaltung der Erfindung für eine Anzeigetafel nach Norm EN 12966. Die Ausrichtung der Chips R, G und B ist horizontal. Deren ausgesandtes Licht ist im Verlauf mittels einzelner Beispiel-Lichtstrahlen dargestellt. Im Grundriss erkennt man die Begrenzungsebenen 4a, 4b, sowie deren Ende, an deren Position sich die nun virtuelle gewölbte Austrittsfläche 6 und darauf der horizontale Brennpunkt Fh der Sammellinse 7 befindet, welche nahtlos einteilig anschließt. Hierdurch wird nicht nur die Effizienz gesteigert, sondern auch die notwendige Größe der Linsenkuppe 8 reduziert, wodurch wiederum ein kleinerer Pixel-Raster möglich wird. Ebenso ergibt sich dadurch die Möglichkeit der Ausbildung einer Befestigungszone 9, mit deren Hilfe die ganze Optik in einem Gerät positioniert, orientiert und abgedichtet werden kann. Sie ist hier vereinfacht zylindrisch dargestellt und nicht an der Lichtformung beteiligt.

Im Aufriss sind die gewählten Begrenzungsflächen 5a und 5b im Profil sichtbar. Die obere Begrenzungsfläche 5a bildet eine leicht gekrümmte konkave Oberfläche, sie reicht von der Eintrittsfläche 2 bis zur virtuellen Austrittsfläche 6 und erweitert den Lichtleiterquerschnitt ein wenig. Die untere Begrenzungsfläche 5b erscheint abgeknickt. Der horizontale Abschnitt beginnt zwar bei der Eintrittsfläche 2, reicht so aber nur über einen Teilbereich des Lichtleiters 3 und ändert dann abrupt seine Richtung unter Ausbildung einer Kante. Der angrenzende schräge Abschnitt hat nur wenig mit der Erzeugung der Lichtverteilung zu tun, er gibt jedoch den Weg frei für Lichtstrahlen, welche von der Fläche 5a reflektiert den unteren Bereich der Lichtverteilung bilden. Außerdem beeinflusst er das Verhalten der Optik bei Sonnenlichteinfall von außen, was aber für diese Anmeldung ohne Belang ist. Im Gegensatz zur schon bekannten Optik können die Verbindungsflächen 5a, 5b auch kürzer oder länger als der Lichtleiter 3 ausgeführt sein, ohne die Farbmischung zu beeinträchtigen, weil in dieser Richtung eben gar keine Mischung stattfindet.

Die Sammellinse 7 davor ist vertikal weniger gekrümmt als horizontal. Das erzeugt hier im Schnitt einen eher ungenauen vertikalen Brennfleck Fv, der um das Maß d hinter der Austrittsfläche 6 mit dem horizontalen Brennpunkt Fh liegt, die Linsenkuppe 8 ist damit eine Freiformfläche. Sie erscheint als ein aufrechtes Oval. Das ist auch im Seitenriss und somit auch von außerhalb der Anzeige erkennbar, und damit kann auf das eingesetzte Mischsystem geschlossen werden. Dass hier ein ungenauer Brennfleck Fv ausgebildet wird, hat nicht nur mit der Gestaltung der Lichtverteilung, sondern wiederum mit der Lenkung einfallenden Sonnenlichts zu tun, was aber nicht Inhalt dieser Anmeldung ist.

Die gekrümmte obere und geknickte untere Begrenzungsfläche führt dazu, dass ein virtueller Beobachter, der sich am oberen oder unteren Ende der Begrenzungsflächen 5a bzw. 5b befindet und Richtung Lichtquelle blickt, im Gegensatz zu einem Beobachter im mittleren Bereich nicht den gesamten Inhalt des Lichtleiters 3 zu sehen bekommt, da die obere Krümmung oder der untere Knick jeweils einen Teilbereich der direkten oder gespiegelten Lichtstrahlen verdeckt, insbesonders kann der direkte Blick auf die LED-Chips nicht möglich sein, obwohl jeder Chip die gesamte Austrittsfläche 6 direkt oder indirekt beleuchtet. Hieraus folgt, dass die Helligkeit der Austrittsfläche 6 in dieser Erfindung im Vergleich zur schon bekannten Anmeldung nicht überall gleich hell ist, sondern einen gestaltbaren Helligkeitsverlauf bildet. Auch deshalb müssen die Chips vertikal gleiche Breiten c und gleiche Abstrahlcharakteristik aufweisen, um gleichartig verdeckt zu werden. Die Helligkeitsverteilung muss auf der Austrittsfläche 6 für alle Farben gleichartig sein, ein einzelner andere positionierter Chip würde die Austrittsfläche in seiner Farbe unterschiedlich beleuchten und damit Farberscheinungen verursachen. Daraus folgt auch, dass die Verbindungsflächen in horizontaler Richtung gerade verlaufen müssen. Damit erscheint jeder Querschnitt des Lichtleiters 3 normal zur Hauptachse h als Rechteck.

Die vertikale Lichtverteilung ist aber nicht nur ein Ergebnis geeigneter Abdeckung der Lichtstrahlen durch die Verbindungsflächen in Zusammenwirken mit der Sammellinse und deren Freiform-Linsenkuppe 8. Denn das abgedeckte Licht geht nicht verloren, es wird an eine andere Stelle der Austrittsfläche 6 hin gespiegelt, wodurch sich auch dessen ursprüngliche Richtung ändert. Es entsteht somit auch eine bestimmte Verteilung der vertikalen Lichtrichtungen in der Austrittsfläche, was ebenso auf die Lichtverteilung einwirkt und durch die Linsenkuppe 8 vergleichmäßigt oder auch betont werden kann. Erst durch das Zusammenspiel von Helligkeit und Richtung der Lichtstrahlen können abrupte Helligkeitsänderungen wie etwa eine Hell-Dunkel-Grenze erzeugt werden, wie sie hier benötigt wird.

Es erscheint einleuchtend, dass die Vielfalt der Gestaltungsmöglichkeiten der oberen und unteren Verbindungsflächen 5a und 5b zusammen mit der Linsenkuppen-Ausarbeitung keine unmittelbare Vorhersage ihrer Wirkung erlauben, hierzu ist eine Optimierung der Geometrie mittels Computersimulation unabdingbar.

Die Lichtverteilung dieser Erfindung entsteht also in horizontaler Richtung durch den Abstand und Erweiterungswinkel der seitlichen Reflexionsebenen und der horizontalen Position des Brennpunktes Fh auf der Austrittsfläche 6 und in vertikaler Richtung durch die Geometrie der vertikalen Begrenzungsflächen 5a und 5b und einem Brennfleck Fv oder einer verlaufenden Brennweite und der gewählten Geometrie der Sammellinse 7. Damit ist die Lichtverteilung nicht auf eine Abweichung von den Regeln der Gestaltung durch Ebenen-Verlängerungen des Lichtleiters und Ergänzung der Lichtverteilung durch angefügte Lichtflächen angewiesen, wie in der bekannten Anmeldung geschildert, die Lichtverteilung wird hier direkt ohne Kompromiss zwischen Lichtverteilung und Farbmischung erzielt und ist damit von besserer Qualität.

Im Aufriss ist auch die Hauptachse h der Sammellinse 7 dargestellt, welche den Brennfleck Fv durchdringt. Sie ist meist nicht identisch mit der Achse der Lichtquelle 1. Unabhängig davon wird noch eine nicht dargestellte sogenannte optische Achse festgelegt, welche die vertikale Ausrichtung der Optik vorgibt, bei der die lichttechnischen Normen erfüllt werden und für die Montage oder Einstellbarkeit der Geräte-Aufhängung wichtig ist.

Es wird darauf hingewiesen, dass die Farbmischung und Lichtverteilung auch hier nirgends durch lichtstreuende Elemente oder raue Oberflächen erzielt wird, wie meistens üblich, sondern nur durch glasklares Material, die besondere Geometrie, hochglanzpolierte Oberflächen und verlustfreie Spiegelungen über Totalreflexion. Nur so kann auch höchste Effizienz erzielt werden. Natürlich ist es trotzdem möglich, manche Flächen oder die Linsenkuppe lokal begrenzt mit Rillen, Prismen, Streustrukturen oder Rauheiten zu überlagern. Weil das erfindungsgemäße System aber vielfältiger als das schon bekannte System zu gestalten ist, sind solche Verluststeigernden Maßnahmen, Korrekturen und Kompromisse meistens vermeidbar.

Damit der vorgegebene Verlauf der Lichtverteilung projiziert werden kann, ist dieser durch geeignete Wahl aller Parameter möglichst genau nachzubilden. Dazu müssen die Lichtquellen, die Größe und Lage der Ein- und Austrittsfläche, die Neigung der beiden Reflexionsebenen 4a und 4b, die Gestaltung der Verbindungsflächen 5a und 5b, die Länge des Lichtleiters 3, der Brennpunkt Fh und der Brennfleck Fv bzw. die Brennweiten und ein Brennweitenverlauf der Sammellinse 7 und deren Durchmesser aufeinander abgestimmt werden, und unvermeidliche Licht-Verluste, etwa von der Sammellinse nicht mehr erfasstes oder in irrelevante Bereiche abgestrahltes Licht akzeptiert, sowie ebenso unvermeidliche Lichtverluste durch Absorption und Grenzflächenübergang, sowie Fertigungstoleranzen und Poliermängel berücksichtigt werden, gleichzeitig soll die Optik zumindest die rechnerisch benötigte Mindest-Helligkeit und beste Effizienz aufweisen. Es ist offensichtlich, dass eine solche Abstimmung der Geometrie nur mittels Computersimulation und vielfachen Iterationsschritten und Optimierungen und viel praktischer Erfahrung erfolgen kann.

FIG. 4 zeigt die Optik aus FIG. 3 in anschaulicher Darstellung, mit nur wenigen Beispiels-Lichtstrahlen, welche aus der Linsenkuppe 8 austreten und ins Unendliche strahlen. Hält man einen Projektionsschirm davor, so zeichnet sich darauf die erzielte Lichtverteilung ab, welche in bekannter Weise mit Kurven gleicher Helligkeit innerhalb eines Winkelrasters als Isocandela-Diagramm, oder auch als Bild oder auch nur als Werte-Tabelle dargestellt werden kann. Ersichtlich sind auch die durch Horizontal- und Vertikalschnitt durch die Hauptachse h sichtbaren Querschnitte der Linsenkuppe 8, strichliert dargestellt.

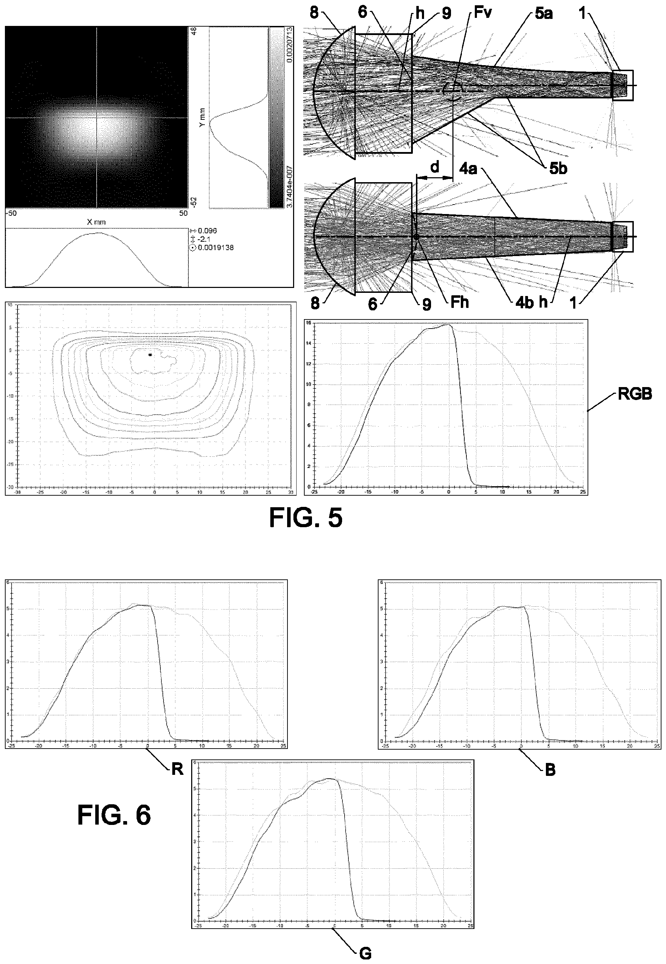

In FIG. 5 sind direkt die Simulationsergebnisse der geschilderten Optik aus Fig. 3 dargestellt, um einen Eindruck davon zu vermitteln. Die unzähligen Lichtstrahlen selbst lassen nicht viel erkennen, insbesonders sieht man Verlustlicht, welches seitlich aus dem Spalt zwischen LED-Lichtquelle 1 und Lichtleiter 3 austritt, sowie Licht, das nach dem Fresnel'schen Brechungsgesetz von der Linsenkuppe 8 zurückreflektiert wird. Es sei erwähnt, dass jeder Lichtstrahl seine eigene Helligkeit besitzt und die erkennbare Menge der Lichtstrahlen alleine gar nichts aussagt, denn es ist ein Mix aus unwichtigen schwachen und bedeutsamen starken Lichtstrahlen aus allen möglichen Richtungen, was erst am Projektionsschirm mathematisch aufbereitet wird. Links oben ist das Ergebnis der Lichtverteilung als visuelle Darstellung samt horizontalem und vertikalem Schnitt durch die Verteilung zu sehen, darunter das Isocandela-Diagramm, und daneben nochmals ein horizontaler und vertikaler Schnitt durch die Lichtverteilung durch die Hauptachse h. In dieser Simulation leuchten alle Chips R, G und B gleich hell.

Die Lichtsimulation erfolgt mittels Ray-Tracing-Verfahren, wobei eine frei wählbare hohe Anzahl von Lichtstrahlen nach einem Zufallsprinzip generiert, auf ihrem Weg durch das optische System physikalisch/mathematisch verfolgt und auf einen Schirm projiziert wird, wobei die erhaltene Lichtverteilung wieder durch statistische Pixel-Auswertung in verschiedenste Lichtverteilungsgrafiken umgerechnet wird, und wobei sich auch viele Kennwerte zu Wirkungsgrad und Verlusten ergeben, die Einhaltung und Verbesserung der Zielvorgaben ist also während der Arbeiten laufend überprüfbar. Auch bei mehreren Millionen Lichtstrahlen entstehen noch immer statistische Schwankungen, die sich durch kleine Unterschiede in den generierten Verteilungskurven äußern, aber visuell entweder gar nicht vorhanden oder nicht wahrnehmbar sind. Fallen diese aber erheblich aus, müssen Analysen und neuerliche Simulationsversuche folgen.

Der Nachweis der ausgezeichneten Mischungsqualität auf Papier ohne Vorlage eines Baumusters und praktischer Vorführung erfolgt nun dahingehend, dass die Lichtverteilungen für jeden Chip einzeln errechnet und die Ergebnisse dann miteinander verglichen werden. Ist die Lichtverteilung sehr ähnlich, was etwa durch Übereinanderlegen der Ergebnisse feststellbar ist, so kann ausgezeichnete Mischungsqualität erwartet werden. FIG. 6 zeigt hierzu die Simulationsergebnisse für die einzelnen Farben R, G und B in Querschnitt-Diagrammen. Man erkennt große Ähnlichkeiten zueinander, aber auch die Ähnlichkeit zur Gesamtverteilung in FIG. 5 rechts unten. Die Vermischung scheint also sehr gut gelungen. Um die statistischen Fehler bewerten zu können, sei hier erwähnt, dass die geometrische Anordnung des roten Chips R und des blauen Chips B in der Optik exakt spiegelbildlich ist, weshalb eigentlich ein identisches Ergebnis zu erwarten wäre. Wie man sieht, trifft das aber nicht ganz zu, es gibt leichte Abweichungen zueinander. Damit wird die statistische Ungenauigkeit des Simulationsverfahrens auch größenordnungsmäßig sichtbar und man kann davon ausgehen, dass das Ergebnis insgesamt sehr gut ist, denn es sind nirgends größere Abweichungen als zwischen den eigentlich gleichwertigen Grafiken R und B ersichtlich. Ebenso können natürlich auch beliebige andere Darstellungen mit jedem Chip einzeln simuliert und miteinander verglichen werden.

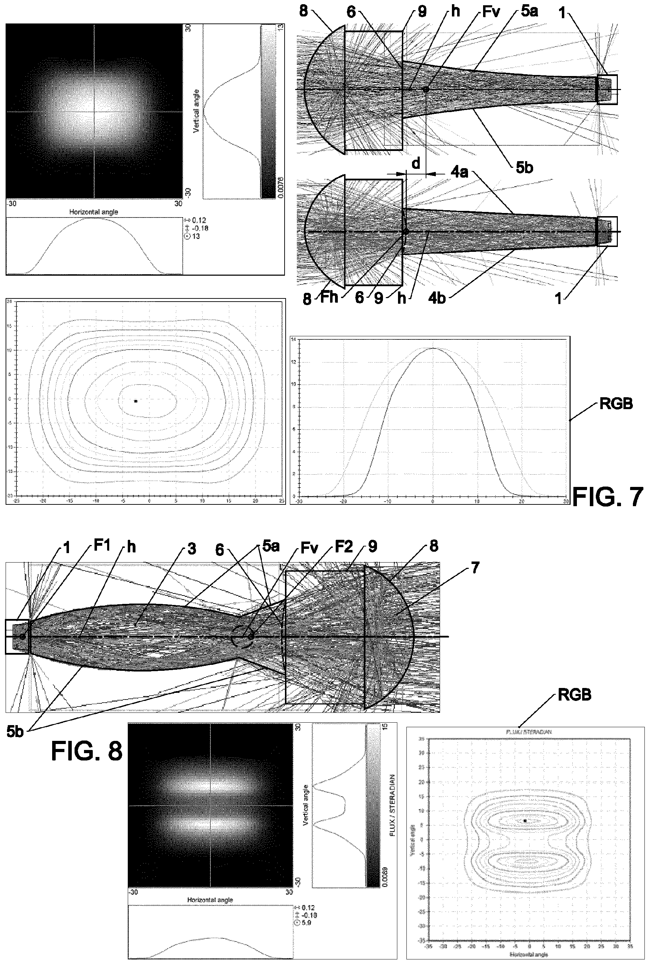

In FIG. 7 ist eine andere simulierte erfindungsgemäße Optikgeometrie in Grund- und Aufriss und ihre Lichtverteilung skizziert, welche etwa für die bereits erwähnte Vollfarb-Taschenlampe geeignet ist, weil sie eine hohe, aber rundum auslaufende Bündelung erzeugt, welche nach Bedarf rechteckig oder auch quadratisch bzw. rund oder oval erfolgen kann. Sie entsteht durch eine trichterartig gekrümmte Erweiterung der Verbindungsflächen 5a und 5b des Lichtleiters 3.

Durch spezielle Gestaltungen der Verbindungsflächen 5a und 5b lassen sich unabsehbare Ausführungen generieren. Interessant sind etwa Geometrien, welche Abschnitte von Kegelschnitt-Kurven und damit verbundenem Brennpunkt verwenden, in welchem etwa die Chips zu liegen kommen können. Damit lassen sich beispielsweise Optiken bauen, welche zwei gemischte Lichtbündel in einem Winkel zueinander aussenden. FIG. 8 zeigt eine solche Optik im Aufriss. Die Verbindungsflächen 5a und 5b haben eine sehr längliche elliptische Geometrie, in deren einem Brennpunkt F1 die Chips der Lichtquelle 1 liegen, deren Licht zum nahe der Sammellinse 7 liegenden Brennpunkt F2 gebündelt wird, wo sich auch deren Brennfleck Fv befindet. Die elliptischen Flächen bündeln zwar das Licht auf den zweiten Brennpunkt F2, allerdings erzeugt jede der Flächen ein eigenes etwas divergentes Lichtbündel, das nicht achsparallel ist und zusammen mit dem direkt durchgehenden Licht die dargestellte Lichtverteilung mit zwei Bündeln unter einem Winkel zueinander erzeugt. Die elliptischen Verbindungsflächen erzeugen trotzdem ein völlig ausgemischtes Licht, was wie in FIG. 6 geschildert überprüfbar ist. Hier wird auch gezeigt, dass die Austrittsfläche 6 nicht nur unterschiedliche Helligkeit, sondern auch stark unterschiedliche Lichtrichtungen aufweisen kann.

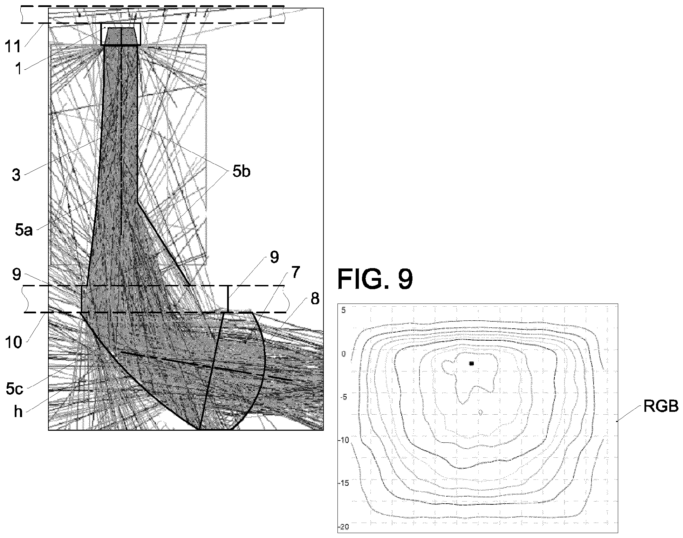

Aber auch Optiken mit interner vollständiger Lichtumlenkung sind ausführbar, wo etwa die Hauptachse nicht senkrecht auf die LEDs und deren Leiterplatte steht. FIG. 9 zeigt eine solche Optik im Aufriss. Sie ist etwa in Straßentunnels mit ebener Decke und geringer Bauhöhe einsetzbar, das Gehäuse wird liegend an der Decke befestigt und die Optiken werden hängend in einem in Fahrtrichtung stark gestreckten Raster angeordnet, um dem Betrachter eine relativ geringer verzerrte Darstellung der Symbole und Texte zu bieten. Die Gerätefront 10, in welcher die Optiken im Befestigungsbereich 9 montiert sind, ist weitgehend liegend orientiert, die Leiterplatten 11 wie üblich parallel dazu angeordnet, die Optik ragt wenig aus dem Gehäuse um gegenseitige Abschattung zu vermeiden. Die Lichtumlenkung erfolgt durch Totalreflexion an der hochglanzpolierten Fläche 5c und strahlt leicht abwärts in den Tunnel. Eine Berücksichtigung von Sonnenstrahlen ist hier nicht nötig, auch die Helligkeit kann viel geringer ausfallen und die erzeugte Lichtverteilung RGB der Situation angepasst sein, die Farbmischung funktioniert auch mit dieser Abwinkelung. Die liegende Montage erlaubt beliebig langgestreckte Anzeigen, was in den meisten Fällen viel besser aussieht als eine gleich niedrig gebaute Standard-Anzeige, insbesonders wenn man dieser schon relativ nahe ist.

Die vielen Lichtstrahlen rund um die gezeigten Optiken sind sehr schwache, mehrfach reflektierte und gebrochene Leck-Lichtstrahlen, denn in diesen Basis-Simulationen wurden nur die wesentlichen optischen Flächen, aber keine vollständigen Bauteile und auch keine Befestigungen in der Gerätefront konstruiert. Die hinterlegten Lichtstrahlbilder in Fig. 5, 7, 8 und 9, sowie Grafiken und Diagramme in Fig. 4 bis 9 entstammen echten Simulationen, mit welchen die Funktionsweise dieser Anmeldung und ihre Farbmischungsqualität überprüft wurde.

Die vorgestellte farbmischende Optik eignet sich immer dann besonders gut, wenn in einer Richtung ein Cosinus-ähnlicher Lichtverlauf und quer dazu ein sehr individueller Lichtverlauf mit Sprüngen, Rampen, Hell-Dunkel-Grenzen, Umlenkungen, Licht-Auskoppelungen etwa für Sensoren etc. benötigt wird.

Die freie Gestaltung der Verbindungsflächen 5a und 5b kann aber auch benutzt werden, um das Eindringen von Fremdlicht von außen, wie etwa Sonnenlicht, zu gestalten und hierbei Retroreflexion oder Absorption zu ermöglichen. Aber auch die technologische Beeinflussung des Spritzprozesses bei der Herstellung von Kunststoff-Optiken oder Montagevorgängen ist hierbei in Grenzen möglich.

Grundsätzlich ist die Optik auch skalierbar und damit an bestimmte höhere Lichtleistungen von Hochleistungs-LEDs adaptierbar. Es ist aber ebenso möglich, eine Vielzahl von gleichen Optiken dicht zu einander anzuordnen und gleichartig anzusteuern, um ein leistungsfähigeres System zu erhalten, was meist viel kostengünstiger ist.

Ansonsten sind auch alle Ausführungen, die in der schon bekannten Anmeldung erwähnt sind, wie etwa Kombinationen beliebiger Farben und auch redundanten gleichen Farben mit Sicherheits-Umschaltung bei LED-Ausfall oder Farbwechsel für sicherheitsrelevante Produkte, aber auch Effektlichter und Bühnenbeleuchtung möglich. Ebenso sind bei Anzeigen Kombinationen von vollfarbtauglichen und einfärbigen Bereichen etwa für grafische Darstellungen und Textfelder mit gleicher Lichtverteilung möglich. Die Optiken müssen auch nicht Pixelraster bilden, sondern können in beliebiger Einzel-Anordnung etwa für Symboldarstellungen wie Ziffern, Buchstaben, roter Kreis und rotes Dreieck positioniert und mit Leiterplatten gleicher LED-Positionierung bestückt sein.

## Patentansprüche

1. Farbmischende Sammeloptik, insbesonders als vollfarb-taugliches Pixel für Bild- oder Video-Anzeigen auf größere Entfernungen, sowie für Spotlichter oder Signalisierung, zur Anwendung im Freien, insbesonders für eine handelsübliche LED-Lichtquelle in RGB-Ausführung, aber auch Bicolor-LED-Lichtquellen oder eine oder mehrere Monocolor-Einzel-Lichtquellen mit gleicher Bauhöhe und eben vergossenem Lichtaustritt, oder auch als Chip-on-Board-Ausführung in gleichartiger Bauweise, mit unmittelbar davor angeordneter Lichteintrittsfläche (2) eines sich in Richtung der Hauptachse (h) erstreckenden Lichtleiters (3), welche das gesamte Licht einfängt und weiterleitet, und einer dem Lichtleiter nachfolgenden Sammellinse (7), **dadurch gekennzeichnet, dass** alle Chips (R, G, B) der LED-Lichtquelle (1) in dichtem Abstand linear angeordnet sind und gleiche Breiten (c) und gleiche Abstrahlcharakteristiken aufweisen, dass der Lichtleiter (3) beidseitig der linearen Anordnung durch darauf senkrecht ausgerichtete, symmetrisch ausgeführte hochglanzpolierte Reflexionsebenen (4a und 4b) begrenzt wird, deren Abstand zueinander konstant ist oder in Richtung der Sammellinse (7) allmählich zunimmt und deren Enden die Austrittsfläche (6) festlegen, sowie quer dazu durch anderweitig geformte hochglanzpolierte Verbindungsflächen (5a und 5b) scharfkantig begrenzt ist, und dass die Sammellinse (7) im Querschnitt in Richtung der linearen Anordnung einen Brennpunkt (Fh) aufweist, der auf dieser Lichtaustrittsfläche (6) des Lichtleiters (3) zu liegen kommt, und quer dazu einen anderen, oder gar keinen ausgeprägten Brennpunkt, oder einen Brennfleck (Fv) aufweist und somit die hochglanzpolierte Linsenkuppe (8) eine Freiformfläche darstellt.

2. Farbmischende Sammeloptik nach Anspruch 1, **dadurch gekennzeichnet, dass** die Optik aus hochtransparentem Kunststoff oder Glas mit einem von den Wellenlängen der eingesetzten Lichtfarben weitgehend unabhängigen Brechungsindex und frei von lichtstreuenden Ingredienzien gefertigt ist.

3. Farbmischende Sammeloptik nach Anspruch 1 oder 2, **dadurch gekennzeichnet, dass** als LED-Lichtquelle (1) insbesonders RGB-LEDs, Zweifarben-LEDs, Monocolor-LEDs oder Chip-LEDs in beliebiger Anzahl und Farbe, vorzugsweise in SMD-Bauform oder in Ausführung als COB (Chip-on-Board) vorgesehen sind.

4. Farbmischende Sammeloptik nach Anspruch 1, 2 oder 3, **dadurch gekennzeichnet, dass** die Länge des Lichtleiters (3) zumindest ein Mehrfaches des Durchmessers der Eintrittsfläche (2) beträgt und mit weiter zunehmender Länge die Zahl der wirksamen Spiegelbilder und damit die Mischungsqualität vorbestimmbar ansteigt.

5. Farbmischende Sammeloptik nach mindestens einem der Ansprüche 1 bis 4, **dadurch gekennzeichnet, dass** jeder Querschnitt des Lichtleiters (3) senkrecht zur Hauptachse (h) ein Rechteck darstellt.

6. Farbmischende Sammeloptik nach mindestens einem der Ansprüche 1 bis 5, **dadurch gekennzeichnet, dass** die Verbindungsflächen (5a und 5b) in Richtung der Hauptachse (h) gekrümmt, abgewinkelt, abgestuft, oder bezüglich der Länge der Reflexionsebenen (4a, 4b) des Lichtleiters (3) gekürzt oder verlängert ausgeführt sind.

7. Farbmischende Sammeloptik nach mindestens einem der Ansprüche 1 bis 6, **dadurch gekennzeichnet, dass** die Austrittsfläche (6) des Lichtleiters (3) nur virtuell vorhanden ist und dieser einstückig in die Sammellinse (7) übergeht.

8. Farbmischende Sammeloptik nach mindestens einem der Ansprüche 1 bis 7, **dadurch gekennzeichnet, dass** die Sammellinse (7) einen umlaufenden Bereich (9) aufweist, der nicht an der Lichtformung beteiligt ist und zum Festhalten, Orientieren und Abdichten der Sammellinse oder der ganzen Optik in einer Anzeige dient.

9. Farbmischende Sammeloptik nach mindestens einem der Ansprüche 1 bis 8, **dadurch gekennzeichnet, dass** die Geometrie, Lichtrichtung und der Helligkeitsverlauf auf der Austrittsfläche (6) auf dem Kopf stehend, durch die Linsenkuppe (8) der Sammellinse (7) modifiziert ins Unendliche projiziert wird und direkt die benötigte Lichtverteilung bildet.

10. Farbmischende Sammeloptik nach mindestens einem der Ansprüche 1 bis 9, **dadurch gekennzeichnet, dass** die lineare Anordnung in Wechselverkehrszeichen horizontal orientiert ist, aber bei anderen Anzeigetafeln und Anwendungen auch beliebig anders orientiert sein kann.

11. Farbmischende Sammeloptik nach Anspruch 10, **dadurch gekennzeichnet, dass** der in Wechselverkehrszeichen benötigte Cosinus-ähnliche Verlauf der Lichtverteilung in horizontaler Richtung alleine durch die Größe der Austrittsfläche (6) in linearer Richtung und den Abstand des horizontalen Brennpunktes (Fh) von der Linsenkuppe (8) ohne weitere Maßnahmen gebildet wird.

12. Farbmischende Sammeloptik nach Anspruch 10 und 11, **dadurch gekennzeichnet, dass** die gewünschte Lichtverteilung in Querrichtung alleine durch die Freiform-Gestaltung der Linsenkuppe (8) zusammen mit der Gestaltung der Verbindungsflächen (5a und 5b) ohne weitere Maßnahmen erzeugt wird.

13. Farbmischende Sammeloptik nach mindestens einem der Ansprüche 1 bis 12, **dadurch gekennzeichnet, dass** Begrenzungsflächen (5a und 5b) elliptische, hyperbolische oder parabolische Abschnittsverläufe aufweisen, wobei die Chips in einem Brennpunkt angeordnet sein können.

14. Farbmischende Sammeloptik nach mindestens einem der Ansprüche 1 bis 13, **dadurch gekennzeichnet, dass** in Querrichtung eine Umlenkung zumindest eines Teiles der Lichtstrahlen durch eine hochglanzpolierte totalreflektierende Fläche (5c) erfolgt.

15. Farbmischende Sammeloptik nach mindestens einem der Ansprüche 1 bis 14, **dadurch gekennzeichnet, dass** die Linsenkuppe (8) oder die Verbindungsflächen (5a und 5b) lokal begrenzt Rillen, Prismen, Streustrukturen oder Rauheiten aufweisen.
